# EUROPEAN PATENT APPLICATION

(11) **EP 2 146 200 A1**
(43) Date of publication of application: **20.01.2010**
(21) Application number: 08104768.0
(22) Date of filing: 16.07.2008
(51) Int. Cl.: G01N 27/447

(54) **Device and method for isoelectric focusing**

(71) Applicant: Agilent Technologies, Inc., Santa Clara, CA 95051 (US)
(72) Inventor: Elgass, Helmut c/o Agilent Techn. R&D and Marketing GmbH & Co.KG, 76337 Waldbronn (DE)
(74) Representative: Barth, Daniel Mathias

(57) **Abstract**

A device and a method for performing isoelectric focussing of sample compounds in a liquid sample is disclosed. The device comprises a multi-compartment frame (105) with at least two adjacent compartments (106A-106E), each compartment being adapted to contain a liquid phase, adjacent compartments being in fluidic contact with one another via fluidic connections (108A-108D) formed in separation walls (107A-107D). The compartments are placed on top of an immobilized pH gradient gel (100) in a gel strip reception (102) thereby establishing a fluidic contact between the gel and the liquid phases contained in the compartments, and providing a pH gradient that extends into the liquid phases in the compartments. The device further comprises at least two electrodes (109,110) for applying an electric field across the compartments, wherein under influence of the electric field, a respective sample compound is forced to move via the fluidic connections (108A-108D) in the pH gradient until an isoelectric focussing of the respective sample compound in one of the compartments (106A-106E) is accomplished. A semipermeable layer (104) prevents the sample compounds from migrating into the pH gradient gel. In a second embodiment, instead of using a semipermeable membrane to prevent macromolecules from penetrating into the gel, the mesh size of the gel is reduced.

## Description

### BACKGROUND ART

The present invention relates to a system for separating sample compounds of a sample. The present invention further relates to a method of performing isoelectric focussing in a separation system.

International patent application WO 01/86279 A1 relates to a device, method and kit for the electrophoretic separation and purification of charged and neutral compounds in an analyte solution. The device comprises a chamber, at least one wall of which is composed of a chemical buffering system. A potential difference is applied across the buffering system, resulting in the charged and neutral compounds being differentially separated by extraction of the charged compounds into the buffering system.

International patent application WO 01/75432 A2 describes a method and device for analysis of charged molecules by solution isoelectric focussing. According to one embodiment, a chamber for holding a liquid has a first membrane permeable to small ions at a first end, and a second membrane permeable to small ions at a second end and opposite the first end. At least one gel membrane partition is positioned along the chamber to define a plurality of compartments within the chamber. The invention provides an isoelectric focussing device and method that can reproducibly fractionate charged molecules into well-defined pools.

International patent application WO 03/019172 A2 relates to an apparatus and method for the separation and purification of charged and neutral compounds in an analyte solution by electrophoretic means using a plurality of compartments to contain the analyte solution, an immobilized chemical buffering system to fix a pH value or a pH gradient in its portion(s) contacting the analyte solution and an electrical field imposed by electrical means disposed in at least two of said compartments.

European patent application EP 1669751 A1 relates to a modular system for a gel electrophoresis device. A carrier element comprising one or more gel strip receptions is described, wherein each of the one or more gel strip receptions is adapted to receive a gel strip, and wherein each of the one or more gel strip receptions is adapted to receive a compartment frame to be located close to the gel strip.

### DISCLOSURE

It is an object of the invention to provide an improved system for separating sample compounds. The object is solved by the independent claim(s). Further embodiments are shown by the dependent claim(s).

According to embodiments of the present invention, a system for separating sample compounds of a sample is provided. The system comprises a multi-compartment set-up with at least two adjacent compartments, each compartment being adapted to contain a liquid phase, adjacent compartments being in fluidic contact with one another. The system further comprises a pH gradient gel being in fluidic contact with the liquid phases contained in the compartments, and being adapted for providing a pH gradient that extends into the liquid phases in the compartments. The system further comprises at least two electrodes for applying an electric field across the compartments, wherein under influence of the electric field, at least a portion of a respective sample compound is forced to move in the pH gradient until an isoelectric focussing of the respective sample compound is accomplished. The system is designed to prevent the sample compounds from migrating into the pH gradient gel.

It is advantageous that the sample compounds are prevented from entering into the pH gradient gel. During separation, the sample compounds solely move in the analyte solution; they do not migrate into the pH gradient gel. In the gel matrix, the migration of the sample compounds is slower than in the analyte solution. Hence, by confining the movement of the sample compounds to the analyte solution, the sample compounds can be separated at a higher rate than before.

Another advantage is that sample compounds may be recovered in the analyte solution. The sample compounds migrate in solution and not in the pH gradient gel, and therefore, the sample compounds to be analyzed are no longer trapped in the pH gradient gel. Extraction procedures such as blotting or spot cutting are no longer necessary, because the pH gradient gel does not contain any concentration of sample compounds at all.

Another advantage is that after a separation has been carried out, the concentration of macromolecules in each of the compartments is as high as possible. The sample compounds are blocked from entering into the pH gradient gel, and therefore, after the separation has been performed, there is a maximum possible concentration of sample compounds in the compartments.

According to a preferred embodiment, at least a portion of a respective sample compound is forced to move in the pH gradient until it reaches a compartment in which a pH range imposed by the pH gradient gel encompasses the respective sample compound's isoelectric point. As soon as a compound has reached a compartment where the local pH corresponds to the compound's isoelectric point, the compound will become neutral. As a consequence, the compound comes to a rest and does not migrate any further. Thus, after some time, each of the sample compounds can be found in a compartment where the local pH range matches with the pl of the sample compound.

According to a preferred embodiment, the sample compounds solely migrate within the liquid phase until they reach their respective isoelectric point. Migration in the gel matrix is considerably slower than migration in the liquid phase. Therefore, to speed up separation of the macromolecular compounds, migration of sample compounds is confined to the liquid phase.

According to a preferred embodiment, the pH gradient gel's pore size is so small that sample compounds are prevented from migrating into the pH gradient gel. Thus, it is made sure that sample compounds cannot penetrate into the pH gradient gel. As a consequence, sample compounds do not migrate in the pH gradient gel at all, and migration of the sample compounds in the electric field is confined to the liquid phase.

According to a preferred embodiment, the pH gradient gel's pore size is decreased due to an increased amount of crosslinking agent in the pH gradient gel. The higher the amount of crosslinking agent, the smaller the pore size will be. Hence, by controlling the amount of crosslinking agent, it is possible to control the pore size of the pH gradient gel. Increasing the amount of crosslinking agent is a simple and cost-efficient strategy for preventing that macromolecular species migrate into the pH gradient gel.

According to an alternatively preferred embodiment, the system further comprises a semipermeable layer arranged between the pH gradient gel and the multi-compartment set-up. Preferably, the semipermeable layer is adapted for preventing that sample compounds migrate into the pH gradient gel.

According to a preferred embodiment, the semipermeable layer is fixed between the pH gradient gel and the multi-compartment set-up. Preferably, the multi-compartment set-up is adapted for pressing the semipermeable layer onto the pH gradient gel, in order to fasten both the semipermeable layer and the pH gradient gel.

Preferably, the semipermeable layer is impermeable for sample compounds. For macromolecular compounds, it is not possible to pass through the semipermeable layer. Hence, the macromolecular sample compounds are blocked from entering into the pH gradient gel. Further preferably, the semipermeable layer is permeable for one or more of: hydrogen ions, hydronium ions, hydroxide ions. Preferably, the pH gradient provided by the pH gradient gel extends through the semipermeable layer into the liquid phase. The pH gradient provided by the pH gradient gel is not blocked by the semipermeable layer. Preferably, the mesh size of the semipermeable layer is chosen such that small ions like e.g. H⁺, H₃O⁺, OH⁻ may pass through the semipermeble layer, whereas large macromolecules like e.g. proteins are blocked from entering into the pH gradient gel.

According to a preferred embodiment, the compartments of the multi-compartment set-up are arranged in a row. Preferably, the multi-compartment set-up comprises a compartment frame. Further preferably, a dimension of the compartment frame corresponds to a row dimension or to a column dimension of a microtiter plate format.

According to a preferred embodiment, the system comprises a gel strip reception adapted to receive the pH gradient gel therein, and further adapted to receive the multi-compartment set-up, which is positioned above the pH gradient gel. Thus, a reliable mechanical assembly is accomplished.

According to a preferred embodiment, the sample is a protein sample comprising a plurality of protein compounds. Isoelectric focussing is well-suited for analysing protein samples comprising a large number of different protein compounds.

According to a preferred embodiment, the pH gradient gel comprises covalently immobilized buffering molecules. A pH gradient may e.g. be produced by varying the ratio of covalently immobilized buffering molecules along the pH gradient gel.

According to a preferred embodiment, the pH gradient gel is implemented as a contiguous gel strip. Preferably, the pH gradient gel is one of: a polyacrylamide gel, an agarose gel, a starch gel.

According to a preferred embodiment, the walls of the compartments comprise respective cut-outs adapted for enabling an exchange of liquid phase between adjacent compartments. Via the cut-outs, charged sample compounds may electromigrate from one compartment to an adjacent compartment.

According to a preferred embodiment, the compartments are constructed such that at least a portion of their walls does not touch the pH gradient gel, but is located at a certain distance from the surface of the pH gradient gel. Thus, fluidic connections are established, and via these fluidic connections, macromolecular species may migrate from one compartment to an adjacent compartment.

According to a preferred embodiment, adjacent compartments are in fluidic contact with each other via thin layer fluidic connections. Preferably, the thin layer fluidic connections have a dimension, width or diameter, which is small enough to prevent substantial natural convection but allows diffusion and migration of sample compounds between adjacent compartments in the buffered pH zone.

According to a preferred embodiment, a respective thin layer fluidic connection is a hole or a micro-channel or an array of holes or micro-channels or a hollow passage that is directly formed in the walls separating two adjacent compartments and/or that is supported in a membrane, a fritted glass, or a filter. Preferably, the thin layer fluid connections are located in the walls that separate adjacent compartments.

According to a preferred embodiment, the electrodes comprise at least one electrode per compartment. By setting each of the electrodes to a predefined potential, the electric field in the compartments can be controlled in a precise manner.

According to a preferred embodiment, the electrodes are provided at respective end portions of the multi-compartment set-up. In this embodiment, electrodes are only provided at the terminal compartments of the multi-compartment set-up. By applying a voltage between the electrodes, an electric field across the compartments of the multi-compartment set-up is generated.

According to a further preferred embodiment, the electrodes are provided at electrode compartments located at respective end portions of the multi-compartment set-up, wherein the walls of the electrode compartments do not comprise cut-outs. Thus, sample macromolecules are prevented from migrating into the electrode compartments, and electrolysis of the macromolecules is avoided.

Preferably, the electrodes are dipped into the compartments.

According to a preferred embodiment, the system comprises a micropipette system adapted for at least one of: supplying fluid to one or more of the compartments, withdrawing fluid from at least one of the compartments. One of the most important advantages of embodiments of the present invention is that the sample compounds can be recovered in solution after separation is finished. Sample fractions that are stuck in the gel matrix do not exist any more. Therefore, sample compounds can be recovered by dipping a micropipette into a respective compartment and drawing in the sample compounds contained therein. According to a preferred embodiment, a microtiter plate multi-pipette is employed.

According to a preferred embodiment, the system comprises a temperature unit adapted for controlling the temperature of the liquid phase. The electrical current applied across the multi-compartment set-up may give rise to heat generation. To reduce any effects due to temperature variations, it may be advantageous to provide a temperature unit.

According to embodiments of the invention, a method of performing isoelectric focussing in a separation system is provided. The separation system comprises a multi-compartment set-up with at least two adjacent compartments and a pH gradient gel, with adjacent compartments being in fluidic contact with one another, and with the pH gradient gel being in fluidic contact with liquid phases contained in the compartments. The pH gradient gel is adapted for providing a pH gradient that extends into the liquid phases of the compartments. The method comprises supplying a sample with a multitude of different sample compounds to at least one of the compartments. The method further comprises applying an electric field across the compartments, wherein under influence of the electric field, at least a portion of a respective sample compound is forced to move in the pH gradient until an isoelectric focussing of the respective sample compound is accomplished. The sample compounds solely migrate within the liquid phase and do not migrate into the pH gradient gel.

According to a preferred embodiment, the sample compounds are recovered in the liquid phase of the compartments after isoelectric focussing has been finished. Further preferably, before recovering the sample compounds in the liquid phase of the compartments, the multi-compartment set-up is pushed against the pH gradient gel in a way that the compartments are sealed against one another. Thus, liquid is prevented from flowing from a compartment to a neighbour compartment.

According to a preferred embodiment, the method is performed as a first step of a two-dimensional gel electrophoresis, with gel electrophoresis being performed as a second step of the two-dimensional gel electrophoresis. Two-dimensional electrophoresis is an efficient technique for analysing samples that contain a large number of different sample compounds. In the first step, sample compounds are separated according to their isoelectric point, and in the second step, the sample compounds are separated according to their respective mobilities.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for controlling a process of isoelectric focussing.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows the components of a separation system according to a first embodiment of the invention;

Fig. 2 shows the separation system of Fig. 1 after the components have been assembled;

Fig. 3 depicts three different compartment frames;

Fig. 4 shows how isoelectric focussing is performed;

Fig. 5 illustrates how two-dimensional gel electrophoresis is performed; and

Fig. 6 shows the components of a separation system according to a second embodiment of the invention.

Isoelectric focussing, also referred to as IEF, is a technique for separating macromolecules according to their respective isoelectric point. The isoelectric point (pl) of a compound denotes a pH value at which the respective compound is electrically neutral and does not carry any overall charge. For separating macromolecules like e.g. proteins according to their isoelectric point, the compounds to be separated are subjected to a pH gradient, with an electric field being applied across the pH gradient. Driven by the electric field, charged moieties move in the pH gradient until they reach a location of the pH gradient where their net charge becomes zero. At this position, which corresponds to the moiety's isoelectric point, the macromolecules of the respective moiety come to a rest and do not migrate any further.

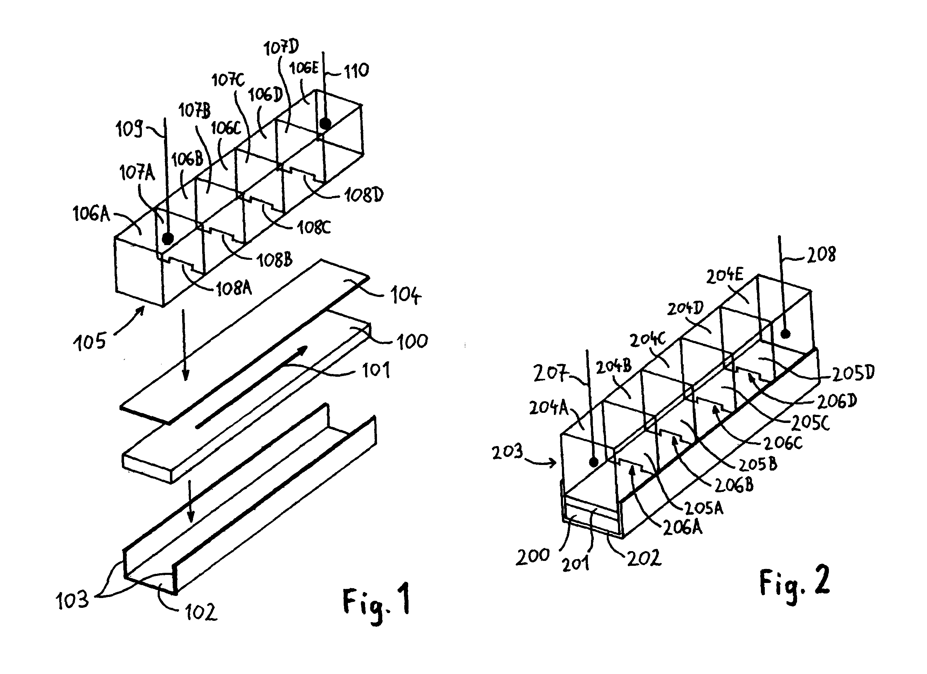

Fig. 1 shows a setup for isoelectric focussing according to a first embodiment of the invention. The setup comprises an immobilized pH gradient (IPG) gel 100, which is adapted for providing a pH gradient in the direction indicated by arrow 101. When the IPG gel 100 is brought in contact with an analyte solution, a pH gradient ranging from a first pH value to a second pH value is imposed on the analyte solution. The IPG gel 100 serves as an immobilized chemical buffering system. The immobilized pH gradient is obtained by copolymerizing a gel matrix (for example an acrylamide gel matrix) with a varying amount of immobilines in a way that the ratio of immobilines changes along the direction indicated by arrow 101. Immobilines are weak acids or bases defined by their respective pK value. Due to the continuous change in the ratio of immobilines along the direction indicated by arrow 101, a stable pH gradient ranging from a first pH value to a second pH value is obtained. Precast IPG gels for various different pH ranges are commercially available.

The IPG gel 100 is inserted into a corresponding gel strip reception 102. The gel strip reception 102 may comprise sidewalls 103 for fixing the IPG gel 100.

According to the first embodiment of the invention, the IPG gel 100 is covered by a semipermeable membrane 104, which is placed between the IPG gel 100 and a compartment frame 105. The compartment frame 105 comprises a plurality of compartments 106A to 106E that are arranged in series. The semipermeable membrane 104 is permeable for small molecules and ions. Hence, analyte solution contained in the compartments 106A to 106E may pass through the semipermeable membrane 104 and migrate into the IPG gel 100. The semipermeable membrane 104 is also permeable for OH⁻ ions and H₃O⁺ ions. For this reason, the pH gradient provided by the IPG gel 100 extends through the semipermeable membrane 104 into the compartments 106A to 106E. However, the semipermeable membrane 104 is not permeable for macromolecules like for example proteins that are larger than the pore size of the semipermeable membrane 104. Macromolecules contained in one or more of the compartments 106A to 106E may not pass through the semipermeable membrane 104. Macromolecules like for example proteins are prevented from migrating into the IPG gel 100. Hence, the IPG gel 100 does not contain any sample macromolecules at all.

The compartment frame 105 is placed on top of the semipermeable membrane 104 and the IPG gel 100. The compartment frame 105 is adapted for pressing both the semipermeable membrane 104 and the IPG gel 100 against the gel strip reception 102. The position of the compartment frame 105 is fixed by the sidewalls 103 of the gel strip reception 102.

The compartments 106A to 106E of the compartment frame 105 are separated by partition walls 107A to 107D. Because of the presence of the partition walls 107A to 107D, convection of fluid between adjacent compartments is prevented. When the compartments 106A to 106E are filled with analyte solution, the analyte solution in each of the compartments is in fluidic contact with the IPG gel 100 via the semipermeable membrane 104. As a consequence, a respective subrange of the pH gradient supplied by the IPG gel 100 extends into each one of the compartments 106A to 106E. Thus, the compartment 106A may for example correspond to a pH range of 2.5-5.0, the compartment 106B may correspond to pH 5.0-5.5, the compartment 106C may correspond to pH 5.5-6.0, the compartment 106D may correspond to pH 6.0-7.5, and the last compartment 106E may correspond to pH 7.5-11. Via the semipermeable membrane 104, the IPG gel 100 enforces a corresponding pH gradient in the compartments 106A to 106E.

To allow for fluidic exchange between adjacent compartments, each of the partition walls 107A to 107D comprises a respective cut-out 108A to 108D. The cut-outs 108A to 108D provide direct fluidic connections between adjacent compartments. Via these fluidic connections, macromolecules dissolved in the analyte solution may migrate to any one of the compartments 106A to 106E. Preferably, in order to form a contiguous pH gradient buffer zone, the cut-out height is less than the thickness of the buffered pH zone.

The compartment frame 105 may be fabricated from any suitable material. It may for example be fabricated from solid plastics, or it may be molded out of a thermoplastic resin. The material should have chemical resistance for example to the analyte solution, the electric current, weak acids or bases and oxidants. For some applications, it may be useful to have some degree of transparency. The compartment frame 105 may be modified in order to avoid adsorption of compounds on its walls.

For applying an electric field along the compartment frame 105, a first electrode 109 may be placed in the first compartment 106A, and a second electrode 110 may be placed in the last compartment 106E. The electrodes 109 and 110 may for example be dipped into the analyte solution in the compartments 106A and 106E. When a voltage is applied between the electrodes 109 and 110, an electric field will be imposed on charged molecules in all the compartments 106A to 106E. The charged moieties will start migrating in the direction of the electric field. During their movement, they may pass through one or more of the cut-outs 108A to 108D.

In the embodiment shown in Fig. 1, two electrodes 109 and 110 are placed in the terminal compartments 106A and 106E of the compartment frame 105. Alternatively, more than two electrodes may be employed. For example, a respective electrode may be placed in each of the compartments 106A to 106E. By applying a suitable electric potential to each of the electrodes, a more homogeneous electric field may be accomplished.

Fig. 2 shows the apparatus for isoelectric focussing after the parts have been assembled. In particular, an IPG gel 200 and a semipermeable membrane 201 have been inserted into a gel strip reception 202, and a compartment frame 203 has been placed on top of the semipermeable membrane 201. The sidewalls of the compartment frame 203 are adapted for pressing both the IPG gel 200 and the semipermeable membrane 201 against the gel strip reception 202. Thus, both the IPG gel 200 and the semipermeable membrane 201 are tightly fixed between the gel strip reception 202 and the compartment frame 203. The compartments 204A to 204E of the compartment frame 203 are filled with analyte solution. Via the semipermeable membrane 201, the analyte solution is in fluidic contact with the IPG gel 200. Each of the partition walls 205A-205D comprises a respective cut-out 206A to 206D that provides a fluidic connection between adjacent compartments. Via the cut-outs 206A to 206D, molecules dissolved in the analyte solution can migrate from one compartment to the adjacent compartment. When the compartment frame 203 is placed on top of the semipermeable membrane 201, the cut-outs 206A to 206D will be located right above the semipermeable membrane 201.

A first electrode 207 is placed in the first compartment 204A, and a second electrode 208 is placed in the last compartment 204E. Optionally, further electrodes may be placed in one or more of the remaining compartments 204B to 204D. By applying a voltage between the electrodes 207 and 208, an electric field is produced along the compartments 204A to 204E. For example, the first electrode 207 may be set to a negative potential relative to the second electrode 208. The applied electric field also extends into the IPG gel 200, and therefore, both the analyte solution and the IPG gel 200 are polarized. The strength of the electric field mainly depends on the resistance of the analyte solution in each of the compartments 204A to 204E.

When the electric field is applied, charged compounds dissolved in the analyte solution will start migrating along the lines of electric flux. As the charged compounds follow the lines of electric flux, they will be forced towards the fluidic connections between adjacent compartments and will migrate through the cut-outs 206A to 206D. For example, negatively charged macromolecules contained in the first compartment 204A will migrate towards the second electrode 208 along the lines of electric flux, as indicated by arrow 209. Because of their size, the macromolecules cannot pass through the semipermeable membrane 201, and hence, they are prevented from penetrating into the IPG gel 200. Therefore, the movement of the charged macromolecules is confined to the analyte solution in the compartments 204A to 204E, whereby the charged macromolecules may pass through the fluidic connections provided by the cut-outs 206A to 206D.

In case only the terminal compartments 204A, 204E comprise respective electrodes 207, 208, the partition walls 205A and 205D of the terminal compartments 204A, 204E for the electrodes may not comprise respective cut-outs at all. Accordingly, sample macromolecules are prevented from travelling to the electrodes 207, 208, and electrolysis of the macromolecules is prevented.

A fluidic connection between adjacent compartments may be realized as a hole, a micro-channel or a hollow passage that is formed in a partition wall separating the two adjacent compartments. Alternatively, the fluidic connection may be implemented as an array of holes or micro-channels that is formed in the separation wall.

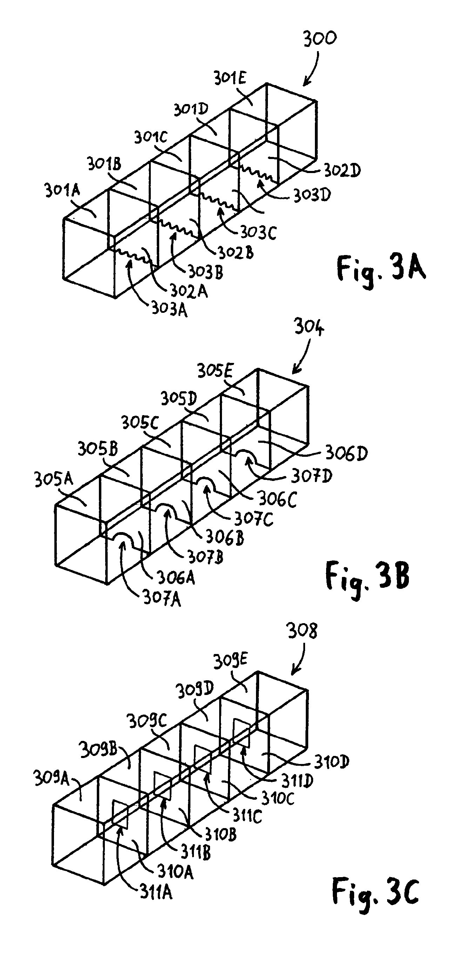

Figs. 3A through 3C show three different embodiments for realizing fluidic connections between neighboring compartments. The compartment frame 300 shown in Fig. 3A comprises five compartments 301A to 301 E separated by partition walls 302A to 302D. The bottom edge of each of the partition walls 302A to 302D is realized as a jagged edge. Accordingly, when the compartment frame 300 is placed on top of a semipermeable membrane, the semipermeable membrane is pressed downwards by the jags 303A to 303D. Furthermore, when the compartment frame 300 is pressed onto the semipermeable membrane, a plurality of fluidic connections are formed between the jagged edges of the partition walls 302A to 302D and the semipermeable membrane. Hence, the jagged lower edges of the partition walls 302A to 302D provide for a fluidic exchange between adjacent compartments.

Fig. 3B shows another embodiment of a compartment frame 304 comprising five compartments 305A to 305E separated by partition walls 306A to 306D. Rounded cut-outs 307A to 307D are located at the respective lower edges of the partition walls 306A to 306D. When the compartment frame 304 is placed on top of the semipermeable membrane, the rectangular cut-outs 307A to 307D provide fluidic connections between neighboring compartments.

Fig. 3C shows another embodiment of a compartment frame 308 with five compartments 309A to 309E separated by partition walls 310A to 310D. For providing fluidic connections between adjacent compartments, each of the partition walls 310A to 310D comprises a respective cut-out 311A to 311D located at a center portion of the respective partition wall, at some distance from the partition wall's lower edge. In order to further reduce convection and prevent physical movement of the analyte solution between two adjacent compartments, it may be advantageous to insert a membrane, a fritted glas, a filter or the like into each of the cut-outs 311A to 311C.

For performing isoelectric focussing, a sample comprising a variety of different macromolecular species is subjected to an electric field in an environment in which a stable pH gradient has previously been generated by some kind of chemical buffering system. The apparatus shown in Figs. 1 and 2 is well-suited for performing isoelectric focussing of unknown sample compounds.

In general, a macromolecule may comprise one or more functional groups like for example carboxyl groups or amine groups which may either be in a protonated state or in a deprotonated state, depending on the pH of the environment. For example, at a low pH value in the acidic range, most of the functional groups will be in a protonated state, and accordingly, the macromolecule will most likely carry a positive overall charge. In contrast, at a pH value in the alkaline range, most of the functional groups will be deprotonated, and accordingly, most of the macromolecules will most likely carry a negative overall charge. Hence, the pH of the analyte solutions strongly effects the overall charge of dissolved macromolecules.

Isoelectric focussing, also known as electrofocussing, is applied particularly often in the study of proteins, which separate based on their relative content of acidic and basic residues, whose value is represented by the protein's isoelectric point (pl). The isoelectric point (pl) is the pH value at which a particular protein carries no net electrical charge. When proteins are separated by isoelectric focussing, they become focussed into sharp stationary bands, with each protein positioned at a point in the pH gradient that corresponds to its pI. Isoelectric focussing is capable of extremely high resolution. It is to be noted that isoelectric focussing is not limited to the field of protein analysis, but may also be employed for separating other types of macromolecular species.

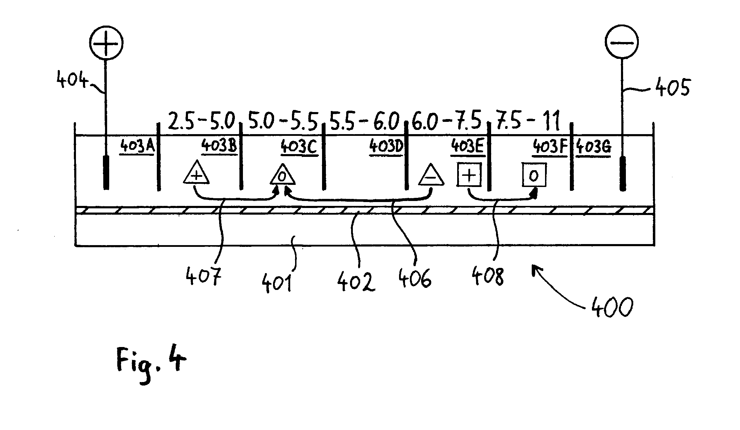

In Fig. 4, it is illustrated how isoelectric focussing is performed, whereby a separation set-up as shown in Figs. 1 and 2 is utilized. Fig. 4 shows a cross-section of a compartment frame 400 that is placed on top of an immobilized pH gradient gel 401. A semipermeable membrane 402 separates the IPG gel 401 from the compartments 403A to 403G of the compartment frame 400. The compartments 403A to 403G are separated by partition walls, with each of the partition walls comprising a cut-out that provides for a fluidic exchange between adjacent compartments.

For applying an electric field across the compartments 403A to 403G, an anode 404 is placed in the compartment 403A, a cathode 405 is placed in the compartment 403G, and a voltage is applied between the anode 404 and the cathode 405..

When the compartments 403A to 403G are filled with analyte solution, the analyte solution penetrates into the IPG gel 401, and the pH gradient produced by the IPG gel 401 extends into the compartments 403A to 403G. Accordingly, a certain pH range is imposed onto each of the compartments 403A to 403G. For example, compartment 403B corresponds to pH 2.5-5.0, compartment 403C is related to pH 5.0-5.5, and compartment 403D corresponds to pH 5.5-6.0. Compartment 403E corresponds to pH 6.0-7.5, and compartment 403F is related to pH 7.5-11.

During separation of sample compounds, heat may be generated. To provide for reliable results, it may be advantageous to provide a cooling device to dissipate the generated heat.

For illustrating isoelectric focussing, it is assumed that a sample comprising a first protein species and a second protein species is supplied to the compartment 403E. The first protein species, which is indicated with small triangles, has its isoelectric point at pH 5.3. The pH value in the compartment 403E ranges from 6.0-7.5 and lies above the isoelectric point of the first protein species. Therefore, proteins of the first protein species contained in the compartment 403E will be negatively charged. Driven by the electric field, these negatively charged proteins will start migrating in the direction indicated by arrow 406. The negatively charged proteins will pass through the cut-outs of the partition walls and migrate into the compartment 403C. In compartment 403C, the pH range of 5.0-5.5 encompasses the isoelectric point of the first protein species, which is at 5.3. Hence, when the proteins of the first protein species reach the compartment 403C, the proteins of the first protein species will not carry an overall charge any more. Therefore, the proteins of the first protein species come to a rest as soon as they reach the compartment 403C.

Proteins of the first protein species may as well be supplied to the compartment 403B. The pH values in the compartment 403B range from 2.5-5.0 and lie below the isoelectric point of the first protein species, which is at 5.3. Accordingly, proteins of the first protein species contained in compartment 403B will be positively charged. The positively charged proteins are attracted by the cathode 405 and start migrating in the direction indicated by arrow 407. In particular, the charged proteins migrate through the cut-out of the partition wall and enter into the compartment 403C. There, the isoelectric point of the first protein species lies within the pH range of the compartment 403C, which extends from 5.0 to 5.5.

Hence, no matter to which of the compartments 403A to 403G the proteins of the first protein species are initially supplied, the proteins of the first protein species will always migrate towards compartment 403C. In compartment 403C, the proteins of the first protein species are accumulated.

The second protein species, which is indicated with small squares, is supplied to the compartment 403E. The isoelectric point of the second protein species is at pH 8.9. The pH range of 6.0-7.5 in the compartment 403E lies below the pl of the second protein species, and accordingly, the proteins of the second protein species in compartment 403E are positively charged. The positively charged proteins will start moving in the direction indicated by arrow 408. As soon as the positively charged proteins reach the compartment 403F, they will become electrically neutral, because the pl of 8.9 of the second protein species lies within the pH range of pH 7.5-11 in the compartment 403F. The proteins of the second protein species will come to a rest in compartment 403F and will not migrate any further. Accordingly, the proteins of the second protein species can be recovered at the compartment 403F.

Hence, after isoelectric focussing has been finished, most of the protein species can be recovered at one of the compartments 403A-403G where the prevailing pH range corresponds to the pl of the respective protein species.

According to the first embodiment of the present invention, the IPG gel is covered by a semipermeable membrane which prevents macromolecules from entering into the IPG gel. It is advantageous that the proteins are prevented from entering into the IPG gel.

During isoelectric separation, the macromolecules solely move in the analyte solution; they do not migrate into the IPG gel. In the analyte solution, the macromolecular compounds move much faster than in the gel matrix, because in the gel matrix, the migration of the macromolecular compounds is slowed down. Isoelectric focussing of the macromolecular species takes less time than in prior art solutions where at least parts of the macromolecular compounds had to migrate through the IPG gel. Hence, by confining the movement of the macromolecular compounds to the analyte solution, the macromolecular compounds can be separated at a higher rate than before. Therefore, the efficiency of isoelectric focussing is improved.

Another advantage is that macromolecules may be recovered in the analyte solution. The macromolecules migrate in solution and not in the gel, and therefore, the macromolecules to be analyzed are no longer trapped within the gel. Hence, the macromolecular species may be recovered in the analyte solution. A respective macromolecular species may e.g. be recovered by dipping a micropipette into the respective compartment and by drawing in the macromolecular species. In a preferred embodiment, before a macromolecular species is drawn in, the compartment frame is pushed against the pH gradient gel in a way that the cut-outs touch the gel and the compartments are sealed against one another. Thus, liquid is prevented from flowing from a compartment to a neighbour compartment.

After separation has been finished, further analysis may be performed to obtain more specific information about a sample, such as for example peptide composition or biological activity. Extraction procedures such as blotting or spot cutting are no longer necessary, because the gel does not contain macromolecular species of the sample.

In prior art solutions, a fraction of a macromolecular species of the sample has been migrating in the IPG gel. According to embodiments of the present invention, this fraction of macromolecules migrating in the pH gradient gel does not exist any more. Therefore, after each of the compounds has reached a compartment that corresponds to the compound's respective pl, there is a maximum possible number of sample macromolecules in the compartments. The sample macromolecules are blocked from entering into the IPG gel, and hence, the number of sample macromolecules in each of the compartments is as high as possible.

Isoelectric focussing (IEF) may be performed as a first step of a two-dimensional electrophoresis. Then, after isoelectric focussing has been performed, gel electrophoresis may be performed as a second step.

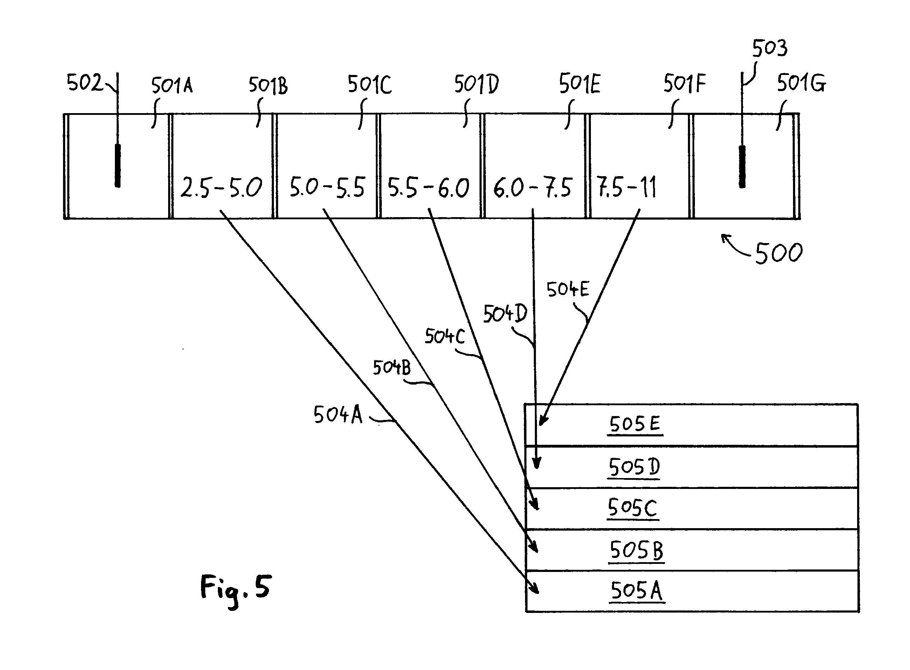

The concept of two-dimensional gel electrophoresis is illustrated in Fig. 5. Fig. 5 shows an apparatus 500 for isoelectric focussing according to an embodiment of the present invention. The apparatus 500 comprises a set of seven compartments 501A to 501 G arranged in series. As indicated in Fig. 5, each of the compartments 501 A to 501 G corresponds to a certain range of pH values. An anode 502 is placed in the first compartment 501A, and a cathode 503 is placed in the last compartment 501G.

After a sample has been supplied to one or more of the compartments, a voltage is applied between the anode 502 and the cathode 503, and the sample compounds start migrating in the electric field. Each of the compounds migrates to a respective one of the compartments 501A to 501G where the pH range corresponds to the compound's isoelectric point. During the isoelectric focussing step, the sample compounds are separated according to their isoelectric point. After isoelectric focussing has been performed, each of the compartments 501A to 501G comprises sample compounds having a pl in a certain range of pI values. The separated sample compounds may be recovered in solution.

Next, as indicated by the arrows 504A to 504E, the sample compounds contained in the compartments 501B to 501F are transferred to a set of electrophoresis gels 505A to 505E. For example, polyacrylamide gel electrophoresis gels, also referred to as PAGE gels, may be used as electrophoresis gels 505A to 505E.

There, a gel electrophoresis step is performed as a second step of the two-dimensional analysis. Sample compounds having a pl in a certain range of pl values are further separated according to their respective mobilities.

Hence, in the isoelectric focussing step, the sample compounds are separated according to their isoelectric point, and in the subsequent gel electrophoresis step, compounds in a certain range of pl values are further separated according to their mobility. Thus, a two-dimensional separation according to isoelectric point and mobility can be performed. The sample compounds can be classified in databases according to their isoelectric point and mobility, whereby a compound's mobility is strongly related to the compound's molecular mass.

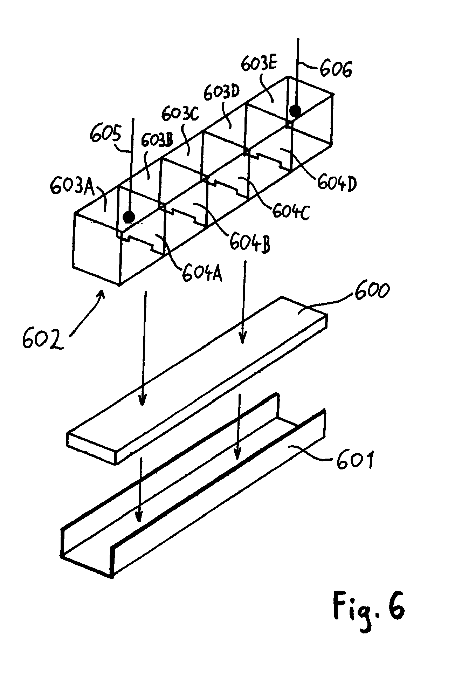

Fig. 6 shows a set-up for separating sample compounds according to a second embodiment of the present invention. A pH gradient gel 600 is placed in a gel strip reception 601, and a compartment frame 602 comprising a plurality of compartments 603A to 603E is placed immediately above the pH gradient gel 600, whereby the partition walls 604A to 604D of the compartment frame 602 are adapted for pressing the pH gradient gel 600 against the gel strip reception 601. The set-up further comprises electrodes 605, 606 for applying an electric field across the compartments 603A to 603E.

In contrast to the first embodiment shown in Fig. 1 and Fig. 2, the set-up of Fig. 6 does not comprise a semipermeable membrane. According to the second embodiment of the invention, instead of using a semipermeable membrane to prevent macromolecules from penetrating into the pH gradient gel 600, the mesh size of the pH gradient gel 600 is reduced. Polymerization conditions are controlled in a way that the resulting mesh size of the pH gradient gel 600 is so small that macromolecules cannot migrate into the pH gradient gel 600 any more. For example, the mesh size of the pH gradient gel 600 may be decreased by increasing the amount of crosslinking agent.

## Claims

1. A system for separating sample compounds of a sample, the system comprising
a multi-compartment set-up (105) with at least two adjacent compartments (1 06A-106E), each compartment being adapted to contain a liquid phase, adjacent compartments (1 06A-1 06E) being in fluidic contact with one another,
a pH gradient gel (100) being in fluidic contact with the liquid phases contained in the compartments (1 06A-1 06E), and being adapted for providing a pH gradient that extends into the liquid phases in the compartments (1 06A-1 06E),
at least two electrodes (109, 110) for applying an electric field across the compartments, wherein under influence of the electric field, at least a portion of a respective sample compound is forced to move in the pH gradient until an isoelectric focussing of the respective sample compound is accomplished,
wherein the system is designed to prevent the sample compounds from migrating into the pH gradient gel (100).

2. The system of claim 1, wherein at least a portion of a respective sample compound is forced to move in the pH gradient until it reaches a compartment in which a pH range imposed by the pH gradient gel encompasses the respective sample compound's isoelectric point.

3. The system of claim 1 or any one of the above claims, wherein adjacent compartments are in fluidic contact with each other in an area proximate to the pH gradient gel.

4. The system of claim 1 or any one of the above claims, wherein the sample compounds solely migrate within the liquid phase until they reach their respective isoelectric point.

5. The system of claim 1 or any one of the above claims, further comprising at least one of:
the pH gradient gel's pore size is so small that sample compounds are prevented from migrating into the pH gradient gel;
the pH gradient gel's pore size is decreased due to an increased amount of crosslinking agent in the pH gradient gel.

6. The system of claim 1 or any one of the above claims, further comprising a semipermeable layer arranged between the pH gradient gel and the multi-compartment set-up.

7. The system of the preceding claim, further comprising at least one of:
the semipermeable layer is adapted for preventing the sample compounds from migrating into the pH gradient gel;
the semipermeable layer is fixed between the pH gradient gel and the multi-compartment set-up;
the multi-compartment set-up is adapted for pressing the semipermeable layer onto the pH gradient gel, in order to fasten both the semipermeable layer and the pH gradient gel;
the semipermeable layer is impermeable for sample compounds;
the semipermeable layer is permeable for one or more of: hydrogen ions, hydronium ions, hydroxide ions;
the pH gradient provided by the pH gradient gel extends through the semipermeable layer into the liquid phase.

8. The system of claim 1 or any one of the above claims, further comprising at least one of:
the compartments of the multi-compartment set-up are arranged in a row;
the multi-compartment set-up comprises a compartment frame;
the multi-compartment set-up comprises a compartment frame, with a dimension of the compartment frame corresponding to a row dimension or to a column dimension of a microtiter plate format;
the system comprises a gel strip reception adapted to receive the pH gradient gel therein, and further adapted to receive the multi-compartment set-up, which is positioned above the pH gradient gel;
the sample is a protein sample comprising a plurality of protein compounds;
the pH gradient gel comprises covalently immobilized buffering molecules;
the pH gradient gel is implemented as a contiguous gel strip;
the pH gradient gel is one of: a polyacrylamide gel, an agarose gel, a starch gel;
the walls of the compartments comprise respective cut-outs adapted for enabling an exchange of liquid phase between adjacent compartments;
the compartments are constructed such that at least a portion of their walls does not touch the pH gradient gel, but is located at a certain distance from the surface of the pH gradient gel.

9. The system of claim 1 or any one of the above claims, wherein adjacent compartments are in fluidic contact with each other via thin layer fluidic connections, further comprising at least one of:
the thin layer fluidic connections have a dimension, width or diameter, which is small enough to prevent substantial natural convection but allows diffusion and migration of sample compounds between adjacent compartments;
a respective thin layer fluidic connection is a hole or a micro-channel or an array of holes or micro-channels or a hollow passage that is directly formed in the walls separating two adjacent compartments and/or that is supported in a membrane, a fritted glass, or a filter;
the thin layer fluid connections are located in the walls that separate adjacent compartments;
the compartments are constructed such that at least a portion of their walls does not touch the pH gradient gel, but is located at a certain distance from the surface of the pH gradient gel, thereby forming the thin layer fluidic connection between adjacent compartments.

10. The system of claim 1 or any one of the above claims, further comprising at least one of:
the electrodes comprise at least one electrode per compartment;
the electrodes are provided at respective end portions of the multi-compartment set-up;
the electrodes are provided at electrode compartments located at respective end portions of the multi-compartment set-up, wherein the walls of the electrode compartments do not comprise cut-outs;
the electrodes are dipped into the compartments;
a micropipette system adapted for at least one of: supplying fluid to one or more of the compartments, withdrawing fluid from at least one of the compartments;
a microtiter plate multi-pipette adapted for at least one of: supplying fluid to one or more of the compartments, withdrawing fluid from at least one of the compartments;
a temperature unit adapted for controlling the temperature of the liquid phase.

11. A method of performing isoelectric focussing in a separation system, the separation system comprising a multi-compartment set-up (105) with at least two adjacent compartments (1 06A-1 06E) and a pH gradient gel (100), with adjacent compartments (1 06A-1 06E) being in fluidic contact with one another, and with the pH gradient gel (100) being in fluidic contact with liquid phases contained in the compartments (106A-106E), the pH gradient gel (100) being adapted for providing a pH gradient that extends into the liquid phases of the compartments (106A-106E), the method comprising
supplying a sample with a multitude of different sample compounds to at least one of the compartments (1 06A-1 06E);
applying an electric field across the compartments, wherein under influence of the electric field, at least a portion of a respective sample compound is forced to move in the pH gradient until an isoelectric focussing of the respective sample compound is accomplished,
wherein the sample compounds solely migrate within the liquid phase and do not migrate into the pH gradient gel (100).

12. The method of claim 11, wherein at least a portion of a respective sample compound moves in the pH gradient until it reaches a compartment in which a pH range imposed by the pH gradient gel encompasses the respective sample compound's isoelectric point.

13. The method of claim 11 or any one of the above claims, comprising at least one of:
the pH gradient gel's structure prevents sample compounds from entering into the pH gradient gel;
the method is performed as a first step of a two-dimensional gel electrophoresis, with gel electrophoresis being performed as a second step of the two-dimensional gel electrophoresis.

14. The method of claim 11 or any one of the above claims, comprising at least one of:
recovering the sample compounds in the liquid phase of the compartments after isoelectric focussing has been finished;
before recovering the sample compounds in the liquid phase of the compartments, pushing the multi-compartment set-up against the pH gradient gel in a way that the compartments are sealed against one another.

15. A software program or product, preferably stored on a data carrier, for controlling or executing the method of claim 11 or any one of the above claims, when run on a data processing system such as a computer.
